# FASCICULE DE BREVET EUROPEEN

(11) **EP 0 581 665 B1**
(45) Date de publication et mention de la délivrance du brevet: **11.12.1996**
(21) Numéro de dépôt: 93401936.5
(22) Date de dépôt: 26.07.1993
(51) Int. Cl.: F17C 13/00, B29C 61/08

(54) **Procédé de protection d'une bouteille de gaz liquéfié et bouteille protégée ainsi obtenue**
Schutzverfahren für Flüssiggasflasche und so erhaltene geschützte Flasche
A method for protecting a bottle of liquefied gas and protected bottle so obtained

(30) Priorité: 31.07.1992 FR 9209575
(43) Date de publication de la demande: 02.02.1994
(73) Titulaire: Euverte, Bernard, F-65100 Ger (FR)
(72) Inventeur: Euverte, Bernard, F-65100 Ger (FR)
(74) Mandataire: Plaçais, Jean-Yves

(56) Documents cités:
- EP-A- 0 021 438
- DE-A- 3 703 253
- DE-U- 8 710 872
- GB-A- 1 455 535
- US-A- 3 972 435
- PATENT ABSTRACTS OF JAPAN vol. 12, no. 445 (M-767)22 Novembre 1988 & JP-A-63 176 897 (HITACHI LTD.) 21 Juillet 1988
- PATENT ABSTRACTS OF JAPAN vol. 9, no. 080 (M-370)10 Avril 1985 & JP-A-59 209 822 (HITACHI DENSEN K.K.) 28 Novembre 1984

## Description

L'invention se rapporte aux bouteilles de gaz liquéfié, utilisées dans l'industrie et destinées à contenir des gaz de natures diverses, par exemple hydrogène, oxygène, azote, etc.

Elle concerne plus précisément un procédé pour protéger de telles bouteilles, essentiellement vis-à-vis des chocs qu'elles peuvent subir, et les bouteilles protégées ainsi obtenues par ce procédé.

Les bouteilles de gaz liquéfié de ce type présentent un fût cylindrique, le plus souvent de section circulaire, destiné à être placé normalement en position verticale, ce fût étant muni d'une embase et d'un dôme équipé d'une vanne, cette dernière étant entourée d'un capuchon protecteur.

Les fûts des bouteilles de ce type ont des dimensions normalisées qui correspondent à différents diamètres externes, par exemple 140 mm, 200 mm, 220 mm, etc. et à différentes hauteurs pouvant varier entre environ 50 cm et 2 m.

Ces bouteilles sont fabriquées en un matériau métallique d'épaisseur suffisante pour résister aux pressions internes élevées qu'elles subissent de la part des gaz qu'elles contiennent et aux pressions externes qu'elles subissent en cours d'utilisation.

Le matériau métallique dont sont formées les bouteilles est revêtu extérieurement d'une peinture protectrice ayant une couleur choisie notamment en fonction de la nature du gaz contenu dans la bouteille et comportant en outre différentes indications.

Etant destinées à contenir des gaz pouvant avoir un caractère dangereux, ces bouteilles doivent subir une procédure d'agrément du Service des Mines avant leur première mise en service et doivent être en outre vérifiées et testées périodiquement par ce même Service. A cette occasion, elles sont totalement éprouvées et reconditionnées, en particulier repeintes complètement.

Au cours de leur utilisation, de leur stockage ou de leur transport, les bouteilles de gaz liquéfié subissent fréquemment des chocs de natures diverses, en particulier de la part d'autres bouteilles, qui n'ont pas nécessairement les mêmes dimensions, mais aussi de la part d'autres objets avec lesquels elles viennent en contact.

Ces chocs peuvent occasionner des dommages au matériau et/ou à la peinture protectrice de la bouteille, d'où des risques de corrosion et de déformation et également d'enlèvement des indications obligatoires portées sur la bouteille.

En outre, ces chocs sont une source de bruit, notamment lorsque plusieurs bouteilles sont transportées simultanément, par exemple sur un camion.

Pour trouver une solution à ces inconvénients, on a proposé de munir les bouteilles de gaz liquéfié d'une sorte de filet en matière plastique à mailles ouvertes qui enveloppe complètement le fût de la bouteille. Toutefois, cette solution n'est pas satisfaisante car la mise en place d'un tel filet n'est pas aisée et, en outre, la résistance du filet n'est pas suffisante, d'où des risques de déchirement.

On a proposé aussi de munir les bouteilles de gaz liquéfié de bracelets amortisseurs de chocs formés en caoutchouc. Mais, ces bracelets ont tendance, sous l'effet de leur élasticité propre, à se déplacer ensuite le long du fût.

Par ailleurs, on a proposé aussi de munir les bouteilles de bracelets en matière rigide introduits en force autour du fût. Mais, cette introduction en force endommage la peinture protectrice de la bouteille et nécessite un appareillage très élaboré.

On connaît aussi, d'après DE-A-3 703 253, un procédé de protection d'une bouteille de gaz liquéfié présentant un fût cylindrique de périmètre externe donné, dans lequel on prépare au moins un manchon en matière plastique, et on place le manchon en un endroit choisi autour du fût.

Pour sa mise en place, le manchon est emmanché, pressé ou collé autour du fût de la bouteille. Il en résulte également des risques de détérioration de la peinture protectrice de la bouteille, d'autant que le manchon, réalisé en PVC, peut générer des dégagements de chlore ou d'autres gaz nocifs.

L'invention a notamment pour but de surmonter les inconvénients mentionnés ci-dessus.

C'est, en particulier, un but de l'invention de procurer un procédé de protection d'une bouteille de gaz liquéfié qui peut être mis en oeuvre de façon simple et efficace.

C'est aussi un but de l'invention de procurer un tel procédé de protection qui peut être appliqué à des bouteilles de gaz liquéfié de dimensions différentes, en particulier à des bouteilles ayant des fûts de hauteurs et/ou de sections différentes.

C'est encore un but de l'invention de procurer un tel procédé de protection qui ne risque pas d'endommager la peinture protectrice des bouteilles de gaz liquéfié.

C'est encore un but de l'invention de procurer un tel procédé qui permet d'assurer une protection efficace aux bouteilles pour absorber les chocs et également servir de protection anti-bruit.

L'invention propose à cet effet un procédé de protection de gaz liquéfié présentant un fût cylindrique de périmètre externe donné, dans lequel on prépare au moins un manchon en matière plastique et on place le manchon en un endroit choisi autour du fût, ce procédé étant caractérisé par les opérations suivantes :
a) préparer au moins un manchon en matière plastique thermorétractable, amené dans une configuration déformée, obtenue par action de la chaleur, en laquelle il présente un périmètre interne élargi par rapport à un périmètre interne initial au'il présente dans une configuration initiale au repos, ce périmètre interne élargi et ce périmètre interne initial étant respectivement supérieur et inférieur au périmètre externe du fût;
b) chauffer le manchon se trouvant dans sa configuration déformée pour l'amener à une température de malléabilité moléculaire propre à permettre la contraction du manchon vers sa configuration initiale; et
c) placer le manchon encore chaud autour du fût à l'endroit choisi et laisser le manchon se refroidir et se contracter autour du fût.

L'invention tire ainsi parti des propriétés de mémoire de certaines matières plastiques qui sont capables d'être amenées sous l'action de la chaleur dans une condition déformée stabilisée, à partir d'une condition initiale stable, et de retourner ensuite vers cette condition initiale lorsqu'elles sont soumises à nouveau à l'action de la chaleur.

L'action de la chaleur dans les deux cas doit être réalisée dans des conditions de température, caractéristiques de la matière utilisée.

Ces propriétés de mémoire permettent à de telles matières de reprendre ou récupérer leurs dimensions initiales dans des conditions bien définies qui dépendent à chaque fois de la nature de la matière.

Ainsi, l'opération a) permet de préparer un manchon ayant un périmètre interne élargi supérieur au périmètre externe du fût.

A l'opération b), le manchon est chauffé de manière homogène dans sa masse pour lui permettre de se contracter de manière homogène et d'exercer ses propriétés de mémoire pour retourner vers ses dimensions initiales.

A l'opération c), le manchon encore chaud est placé autour du fût à l'endroit choisi et son refroidissement, quasi-instantané du fait de la meilleure ou de l'écart de conductibilité thermique du matériau métallique de la bouteille, lui permet de se contracter autour du fût. Du fait que le périmètre externe du fût est supérieur au périmètre interne initial du tube à partir duquel a été formé le manchon, ce dernier ne peut revenir complètement à ses dimensions initiales, ce qui assure un serrage particulièrement efficace du manchon autour du fût.

Dans une première variante de réalisation de l'invention, l'opération a) comprend les phases suivantes :
- prévoir un tube en une matière plastique propre à être rendue thermorétractable présentant ledit périmètre interne initial;
- pousser le tube autour d'un outil de déformation de section croissante, tout en soumettant le tube à l'action de la chaleur dans des conditions contrôlées, de manière qu'il présente ledit périmètre interne élargi;
- refroidir le tube tout en le maintenant audit périmètre interne élargi; et
- sectionner le tube en manchons individuels présentant chacun ledit périmètre interne élargi.

Dans une seconde variante de réalisation de l'invention, l'opération a) comprend les phases suivantes :
- prévoir un tube en une matière plastique propre à être rendue thermorétractable présentant ledit périmètre interne initial;
- sectionner le tube en manchons individuels présentant chacun ledit périmètre interne initial;
- passer chaque manchon autour d'un outil de déformation de section croissante et soumettre le manchon à l'action de la chaleur dans des conditions contrôlées, de manière qu'il présente ledit périmètre interne élargi; et
- refroidir le manchon présentant ledit périmètre interne élargi.

Ainsi, dans l'une ou l'autre des deux variantes précitées, on part d'un tube en matière plastique propre à être rendue thermorétractable dont le périmètre interne correspond audit périmètre interne initial et on aboutit à des manchons individuels dont le périmètre interne correspond audit périmètre interne élargi.

Les manchons ainsi préparés possèdent une stabilité dimensionnelle remarquable et peuvent être stockés sans conditions particulières pendant des périodes longues avant leur utilisation.

Il peut, toutefois, être avantageux de disposer dans le manchon élargi un objet, par exemple un mandrin en carton, pour maintenir le manchon dans sa dimension élargie. Ceci permet d'éviter tout risque de thermorétractation accidentel pour le cas où la température de stockage deviendrait trop élevée.

Il suffit ensuite de les chauffer à leur température caractéristique pour déclencher l'exercice de leurs propriétés de mémoire et leur permettre de retourner vers leurs dimensions initiales.

Dans l'une ou l'autre des variantes précitées, l'outil de déformation, qui s'apparente à une forme de fusée, et le tube sont soumis à un déplacement axial relatif de manière que le périmètre interne du tube s'élargisse progressivement sous l'action combinée de l'outil de déformation et de la chaleur.

Cette chaleur peut être apportée par différents moyens, en particulier par des buses qui soufflent de l'air chaud, dans des conditions de température réglées, sur le tube ou le manchon, en regard de l'outil de déformation.

Il est également possible de chauffer préalablement le tube de manière homogène, à une température supérieure à la température caractéristique de déformation, par exemple dans une étuve, et de le présenter ensuite devant l'outil de déformation. Ce dernier peut, le cas échéant, être chauffé ou chauffant.

Dans l'opération a), et dans l'une ou l'autre des deux variantes précitées, le sectionnement du tube en manchons individuels est effectué avantageusement à l'aide d'une ou plusieurs molettes tranchantes déplacées à la périphérie du tube, dans un plan perpendiculaire à l'axe du tube.

L'opération b) de chauffage du manchon peut être effectuée par tout moyen de chauffage approprié. Un moyen commode consiste à placer un ou plusieurs manchons dans un four ventilé porté à une température suffisante pour provoquer l'instabilité moléculaire de la matière du manchon lui permettant l'exercice de ses propriétés de mémoire.

A l'opération c), il suffit de placer le manchon encore chaud autour du fût à l'endroit choisi et de le maintenir à cet endroit, par exemple manuellement, en laissant le manchon se refroidir et se contracter autour du fût.

Bien qu'il puisse être envisagé de diriger un flux d'air froid sur le manchon pour le refroidir, un tel moyen n'est généralement pas nécessaire.

En effet, il suffit simplement de laisser le manchon se refroidir à la température ambiante, ce refroidissement étant facilité par le contact avec le fût de la bouteille, qui est lui aussi à la température ambiante.

Généralement, le refroidissement et la contraction du manchon autour du fût de la bouteille s'effectuent en quelques secondes.

Ainsi, en disposant de séries de manchons préparées à l'avance et convenant à différents types de fûts de bouteilles, il est possible de protéger les bouteilles d'une façon particulièrement simple et rapide.

Dans une forme de réalisation préférée de l'invention, on place deux manchons autour du fût de la bouteille, respectivement au voisinage des deux extrémités du fût.

Toutefois, pour des fûts de grande longueur ou hauteur, il peut être envisagé de placer un troisième manchon dans une région intermédiaire du fût.

Le manchon peut être réalisé en différentes dimensions en fonction du type des bouteilles à protéger.

Généralement, un tel manchon aura une épaisseur de 3 à 5 mm et une hauteur de 3 à 5 cm pour constituer une protection efficace.

La matière plastique propre à être rendue thermorétractable dont est formé le manchon peut être notamment une matière du type polyéthylène (PE) ou polypropylène (PP).

Dans une forme de réalisation préférée de l'invention, on utilise du polyéthylène, en particulier du type à haute densité ayant une bonne résistance à la lumière et aux intempéries.

En outre, une telle matière plastique est particulièrement résistante aux acides, aux alcalins et aux solvants, notamment l'acétone, couramment utilisés dans l'industrie.

Sous un autre aspect, l'invention concerne une bouteille de gaz liquéfié protégée par au moins un manchon en matière plastique rendue thermorétractable, telle qu'obtenue par le procédé défini ci-dessus.

Il est à noter que le ou les manchons dont est munie la bouteille peuvent être colorés, le cas échéant, pour s'harmoniser avec la couleur de la peinture de revêtement de la bouteille.

De plus, si un tel manchon adhère parfaitement à une bouteille de gaz liquéfié, il peut être enlevé facilement de la bouteille à l'aide d'un outil approprié, lorsque la bouteille doit être remise à neuf.

Dans la description qui suit, faite à titre d'exemple, on se réfère au dessin annexé, sur lequel :
- la figure 1 est une vue en élévation d'une bouteille de gaz liquéfié munie de deux manchons de protection selon l'invention;
- les figures 2 à 4 montrent différentes phases de préparation d'un manchon dans une première variante du procédé de l'invention;
- les figures 5 à 7 montrent différentes phases de préparation d'un manchon dans une seconde variante du procédé de l'invention;
- la figure 8 représente un outil pour le sectionnement d'un tube en manchons individuels;
- la figure 9 est une représentation schématique d'un four permettant le chauffage d'un manchon; et
- la figure 10 est une vue en élévation d'une bouteille de gaz liquéfié sur le fût de laquelle un manchon a déjà été mis en place et un second manchon est en cours d'introduction.

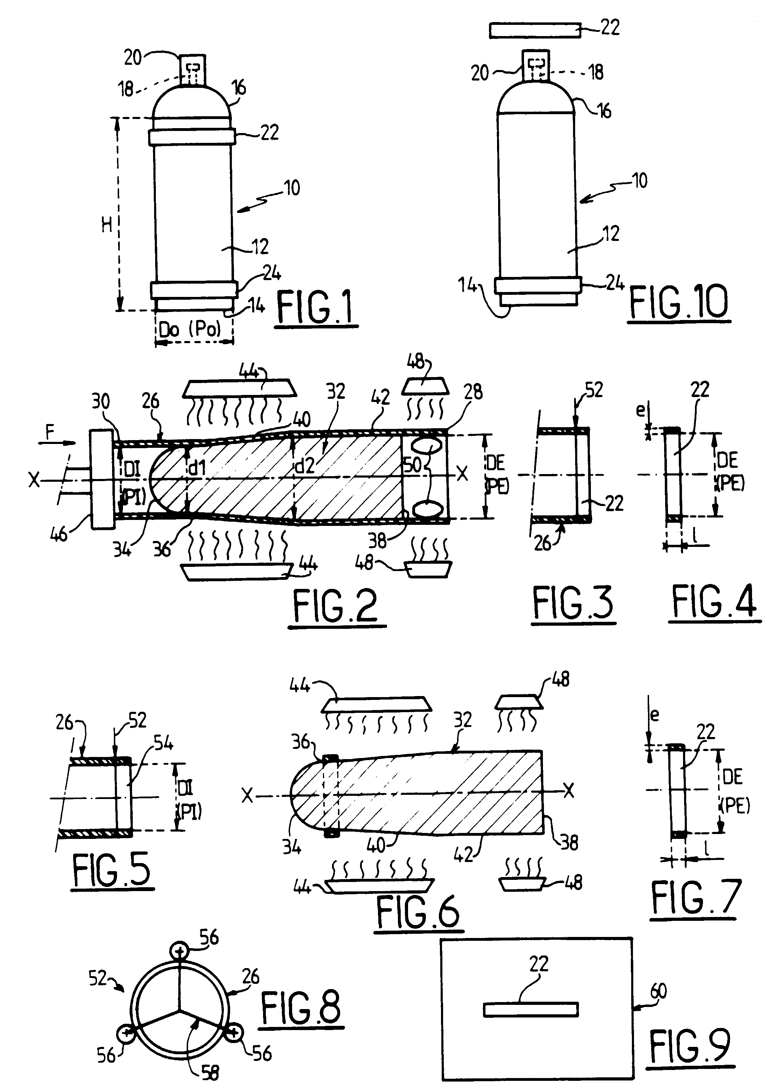

On se réfère tout d'abord à la figure 1 qui représente une bouteille 10 destinée à contenir un gaz liquéfié et présentant un fût cylindrique 12 de diamètre externe D₀ donné auquel correspond un périmètre P₀ donné. Le fût 12 destiné à être placé normalement en position verticale comporte une embase 14 et un dôme 16 en forme de calotte. Ce dernier est muni d'une vanne 18 (représentée en trait interrompu) protégée par un capuchon cylindrique 20.

Une bouteille de ce type est largement utilisée dans l'industrie et peut exister en différentes dimensions, c'est-à-dire avec différents diamètres externes D₀ et hauteurs H du fût 12.

Conformément à l'invention, la bouteille 10 est munie de deux manchons 22 et 24 chacun formé en une matière plastique propre à être rendue thermorétractable, les manchons 22 et 24 entourant le fût 12 respectivement au voisinage de son extrémité supérieure et de son extrémité inférieure.

On se réfère maintenant aux figures 2 à 4 qui montrent différentes opérations de réalisation d'un manchon propre à être placé autour du fût 12 d'une bouteille de gaz liquéfié telle que représentée à la figure 1, et cela dans une première variante du procédé de l'invention.

On part d'un tube 26, par exemple du commerce, formé en une matière plastique propre à être rendue thermorétractable, par exemple du type polyéthylène ou du polypropylène.

Comme déjà indiqué, on utilise avantageusement un tube du type polyéthylène, spécialement du type polyéthylène haute densité (PE-HD).

Le tube 26 possède une configuration initiale au repos dans laquelle il présente un diamètre interne initial DI (correspondant à un périmètre interne PI) qui doit être sensiblement inférieur au diamètre externe D₀ (correspondant à un périmètre externe P₀) du fût 12. A titre d'exemple, pour un fût de diamètre externe D₀ de 140 mm, on choisit avantageusement un tube 26 de diamètre interne initial DI de 130 mm. Le tube 26 présente une extrémité antérieure 28 et une extrémité postérieure 30 qui, dans l'exemple, sont situées respectivement du côté droit et du côté gauche de la figure 2. L'extrémité 28 qui possède initialement le diamètre interne DI est enfilée sur un outil de déformation 32 qui affecte une forme de révolution du type fusée autour d'un axe XX et qui, dans l'exemple, est placé horizontalement. L'outil 32 possède une extrémité adaptée 34 qui débouche sur une partie cylindrique 36 de diamètre d₁ égal à DI. Le diamètre de l'outil 32 s'accroît ensuite progressivement (de la gauche vers la droite de la figure 2) depuis l'extrémité 34 jusqu'à une extrémité opposée 38. A partir de l'extrémité 36, l'outil 32 comporte tout d'abord une partie de transition 40 dans laquelle le diamètre de l'outil s'accroît progressivement de la valeur d₁ jusqu'à une valeur d₂ qui est supérieure à d₁ et supérieure à D₀. Au-delà de la partie de transition 40, l'outil 32 comporte une partie 42 dont le diamètre est sensiblement égal au diamètre d₂.

Des moyens de chauffage 44, par exemple du type à air chaud, sont placés autour de l'outil 32 pour envoyer de l'air chaud dans la région de l'extrémité 36 et de la zone 40.

Le tube 26 est poussé de la gauche vers la droite au moyen d'un piston 46 (comme montré par la flèche F), ce qui permet d'élargir progressivement le diamètre interne du tube 26.

L'extrémité antérieure 28 du tube 26 présente ainsi un diamètre interne élargi DE qui est sensiblement égal à d₂ et qui est supérieur au diamètre externe D₀ du fût 12. A ce diamètre interne DE correspond un périmètre interne élargi PE.

Dans l'exemple indiqué précédemment, pour un fût d'un diamètre de 140 mm, DE peut avoir par exemple une valeur de 150 mm.

Lorsque l'extrémité 28 (dont le diamètre a été élargi), dépasse l'extrémité 38 de l'outil 32, elle est ensuite refroidie, soit naturellement, soit au moyen de buses 48 projetant de l'air froid. A ce niveau, l'extrémité du tube est de préférence soutenue par un support 50, par exemple du type à rouleaux, pour que l'extrémité du tube conserve le diamètre interne DE.

Le tube ainsi refroidi est ensuite découpé par un outil 52 (représenté schématiquement à la figure 3) pour former un manchon 22 tel que représenté à la figure 4.

Le manchon 22 présente un diamètre interne élargi DE (et un périmètre interne élargi PE), une épaisseur e qui est de préférence comprise entre 3 et 5 mm et une longueur 1 généralement comprise entre 3 et 5 cm.

Dans la variante représentée aux figures 5 à 7, on part d'un tube 26 identique à celui de la figure 2, c'est-à-dire possédant un diamètre interne initial DI et un périmètre interne initial PI.

A la différence de la variante précédente, le tube est d'abord sectionné, au moyen d'un outil 52, en manchons 54 qui présentent par conséquent le diamètre interne DI. Ces manchons sont ensuite enfilés sur un outil 32 identique ou analogue à celui de la figure 2 et, sous l'action de la chaleur et d'une poussée, sont élargis de manière à présenter un diamètre externe élargi DE et, par conséquent, un périmètre externe élargi PE.

Après refroidissement, on obtient un manchon 22 (figure 7) analogue au manchon 22 de la figure 4.

On se réfère maintenant à la figure 8 qui montre une forme de réalisation préférée de l'outil 52 (figures 3 et 5). L'outil comprend dans l'exemple trois molettes coupantes 56 disposées à 120° les unes par rapport aux autres en étant portées par un support commun 58 pouvant être amené en rotation dans un plan perpendiculaire à l'axe du tube pour assurer la découpe du tube en manchons individuels.

Le manchon élargi obtenu peut être muni intérieurement, par exemple, d'un mandrin en carton ou analogue pour le maintenir au périmètre élargi. On évite ainsi tout risque de thermorétractation intempestif dans le cas où la température de stockage serait trop élevée.

On se réfère maintenant à la figure 9 qui représente, de façon schématique, un four 60 dans l'exemple du type ventilé à air chaud porté à une température suffisante et homogène pour provoquer à nouveau l'instabilité moléculaire de la matière plastique du manchon en vue de sa contraction. La température à laquelle doit être porté le four dépend bien évidemment de la nature précise de la matière du manchon, cette température étant généralement comprise entre 100 et 200°C dans la plupart des matières plastiques connues de ce type. Dans le four 60, on peut placer un ou plusieurs manchons 22 tels que représentés à la figure 4 ou à la figure 7.

Il suffit de laisser le manchon dans le four pendant une période relativement brève, de l'ordre de 1 ou 2 mn, pour que celui-ci atteigne sa température d'instabilité moléculaire.

Ensuite, le manchon encore chaud doit être enfilé immédiatement sur le fût 12 d'une bouteille 10.

On se réfère maintenant à la figure 10 qui montre une bouteille 10 dont le fût 12 vient de recevoir un manchon 24 et sur laquelle un autre manchon 22 est en cours d'introduction. Le manchon encore chaud est enfilé autour du fût 12 et placé à l'endroit choisi et est maintenu à cet endroit choisi pendant un temps relativement bref, de l'ordre de quelques secondes, pour permettre son refroidissement.

Le refroidissement du manchon à la température ambiante, qui est en outre accéléré par le contact avec le fût 12 également à la température ambiante, facilite sa contraction. Le manchon tend à revenir à ses dimensions initiales, c'est-à-dire à revenir vers son diamètre interne initial DI et son périmètre interne initial PI. Comme le périmètre PI est inférieur au périmètre externe P₀ du fût 12, le manchon 22 vient serrer fermement le fût 12 de la bouteille et s'immobiliser sur celle-ci. Tout enlèvement accidentel ou intempestif du manchon ne peut ensuite se produire.

Comme déjà indiqué, la bouteille 10 comporte avantageusement deux manchons 22 et 24 (figure 1) mais elle pourrait, le cas échéant, comporter un autre manchon placé en position intermédiaire, notamment dans le cas d'une bouteille de grande hauteur.

Le manchon peut être réalisé en différentes matières plastiques propres à être rendues thermorétractables et être coloré ou pigmenté le cas échéant en fonction des applications souhaitées. De plus, ce manchon peut éventuellement recevoir des inscriptions ou indications particulières, en plus de celles déjà portées sur le fût de la bouteille.

On obtient ainsi une bouteille qui se trouve bien protégée à l'égard des chocs éventuels par des manchons qui jouent le rôle d'amortisseurs de chocs et d'amortisseurs phoniques.

L'invention s'applique de façon générale à des bouteilles à fût cylindrique de section circulaire ou non circulaire.

## Revendications

1. Procédé de protection d'une bouteille de gaz liquéfié présentant un fût cylindrique de périmètre externe donné, dans lequel on prépare au moins un manchon (22, 24) réalisé en matière plastique, et on place le manchon en un endroit choisi autour du fût (12), caractérisé en ce qu'il comprend les opérations suivantes :
a) préparer au moins un manchon (22, 24) en matière plastique thermorétractable, amené dans une configuration déformée, obtenue par action de la chaleur, en laquelle il présente un périmètre interne élargi (PE) par rapport à un périmètre interne initial (PI) qu'il présente dans une configuration initiale au repos, ce périmètre interne élargi (PE) et ce périmètre interne initial (PI) étant respectivement supérieur et inférieur au périmètre externe (P₀) du fût (12);
b) chauffer le manchon (22, 24) se trouvant dans sa configuration déformée pour l'amener à une température de malléabilité moléculaire propre à permettre la contraction du manchon vers sa configuration initiale;
c) placer le manchon (22, 24) encore chaud autour du fût (12) à l'endroit choisi et laisser le manchon se refroidir et se contracter autour du fût.

2. Procédé selon la revendication 1, caractérisé en ce que l'opération a) comprend les phases suivantes :
- prévoir un tube (26) en une matière plastique propre à être rendue thermorétractable présentant ledit périmètre interne initial (PI);
- pousser le tube (26) autour d'un outil de déformation (32) de section croissante, tout en soumettant le tube (26) à l'action de la chaleur dans des conditions contrôlées de manière qu'il présente ledit périmètre interne élargi (DE);
- refroidir le tube (26) tout en le maintenant audit périmètre interne élargi (PE); et
- sectionner le tube (26) en manchons individuels (22) présentant chacun ledit périmètre interne élargi (PE).

3. Procédé selon la revendication 1, caractérisé en ce que l'opération a) comprend les phases suivantes :
- prévoir un tube (26) en une matière plastique propre à être rendue thermorétractable présentant ledit périmètre interne initial (PI);
- sectionner le tube (26) en manchons individuels (54) présentant chacun ledit périmètre interne initial (PI);
- passer chaque manchon (54) autour d'un outil de déformation (32) de section croissante et soumettre le manchon à l'action de la chaleur dans des conditions contrôlées de manière qu'il présente ledit périmètre interne élargi (PE); et
- refroidir le manchon (22) présentant le périmètre interne élargi (PE).

4. Procédé selon la revendication 1, caractérisé en ce que l'opération b) est effectuée dans un four ventilé à air chaud (60) dans lequel on place au moins un manchon (22) pendant une durée suffisante pour l'amener à sa température de malléabilité moléculaire.

5. Procédé selon la revendication 1, caractérisé en ce qu'à l'opération c) le refroidissement du manchon (22) est effectué à la température ambiante et au contact du fût (12) de la bouteille (10), également à la température ambiante.

6. Procédé selon l'une des revendications 1 à 5, caractérisé en ce que l'on place deux manchons (22, 24) autour du fût (12) de la bouteille (10), respectivement au voisinage des deux extrémités du fût.

7. Procédé selon l'une des revendications 1 à 6, caractérisé en ce que le manchon (22) a une épaisseur (e) de 3 à 5 mm et une longueur (l) de 3 à 5 cm.

8. Procédé selon l'une des revendications 1 à 7, caractérisé en ce que la matière plastique thermorétractable est du polyéthylène (PE), en particulier du type à haute densité (PE-HD).

9. Bouteille de gaz liquéfié protégée par au moins un manchon (22, 24) en matière plastique propre à être rendue thermorétractable, telle qu'obtenue par le procédé de l'une des revendications 1 à 8.

## Patentansprüche

1. Verfahren zum Schutz einer Flüssiggasflasche mit einem zylindrischen Schaft mit einem gegebenen Außenumfang, bei dem wenigstens eine aus Kunststoff hergestellte Muffe (22, 24) vorbereitet wird und die Muffe an einer ausgewählten Stelle um den Schaft (12) angeordnet wird, dadurch gekennzeichnet, daß es die folgenden Operationen umfaßt:
a) es wird wenigstens eine Muffe (22, 24) aus wärmeschrumpfbarem Kunststoffmaterial vorbereitet, die in eine verformte Ausgestaltung gebracht wurde, die durch Wärmeeinwirkung erhalten wurde, und in der sie einen größeren Innenumfang (PE) bezüglich eines Ausgangsinnenumfangs (PI) aufweist, den sie bei einer Ausgangsruheausgestaltung aufweist, wobei dieser größere Innenumfang (PE) und dieser Ausgangsinnenumfang (PI) über bzw. unter dem Außenumfang (P0) des Schaftes (12) liegen;
b) die Muffe (22, 24), die sich in ihrer verformten Ausgestaltung befindet, wird erwärmt, um sie auf eine Molekularverformbarkeitstemperatur zu bringen, die die Zusammenziehung der Muffe in ihre Ausgangsausgestaltung zulassen kann;
c) die noch warme Muffe (22, 24) wird an einer ausgewählten Stelle um den Schaft (12) angeordnet, und man läßt die Muffe abkühlen und sich um den Schaft zusammenziehen.

2. Verfahren nach Anspruch 1, dadurch gekennzeichnet, daß die Operation a) folgende Stufen umfaßt:
- es wird ein Rohr (26) aus einem Kunststoff vorgesehen, der wärmeschrumpfbar gemacht werden kann, und das den Ausgangsinnenumfang (PI) aufweist;
- das Rohr (26) wird um ein Verformungswerkzeug (32) mit ansteigendem Querschnitt geschoben, wobei das Rohr (26) gleichzeitig unter kontrollierten Bedingungen derart der Wärmeeinwirkung unterzogen wird, daß es den größeren Innenumfang (DE) aufweist;
- das Rohr (26) wird abgekühlt und gleichzeitig auf dem größeren Innenumfang (PE) gehalten; und
- das Rohr (26) wird in einzelne Muffen (22) zerteilt, die jeweils den größeren Innenumfang (PE) aufweisen.

3. Verfahren nach Anspruch 1, dadurch gekennzeichnet, daß die Operation a) folgende Stufen umfaßt:
- es wird ein Rohr (26) aus einem Kunststoff vorgesehen, der wärmeschrumpfbar gemacht werden kann, und das den Ausgangsinnenumfang (PI) aufweist;
- das Rohr (26) wird in einzelne Muffen (54) zerteilt, die jeweils den Ausgangsinnenumfang (PI) aufweisen.
- jede Muffe (54) wird um ein Verformungswerkzeug (32) mit ansteigendem Querschnitt geführt, und die Muffe wird unter kontrollierten Bedingungen derart der Wärmeeinwirkung unterzogen wird, daß sie den größeren Innenumfang (PE) aufweist;
- die Muffe (22) mit dem größeren Innenumfang (PE) wird abgekühlt.

4. Verfahren nach Anspruch 1, dadurch gekennzeichnet, daß die Operation b) in einem Heißwindofen (60) durchgeführt wird, in dem wenigstens eine Muffe (22) über einen ausreichend langen Zeitraum angeordnet wird, um sie auf ihre Molekularverformbarkeitstemperatur zu bringen.

5. Verfahren nach Anspruch 1, dadurch gekennzeichnet, daß die Abkühlung der Muffe (22) bei der Operation c) bei Umgebungstemperatur und in Kontakt mit dem Schaft (12) der Flasche (10) durchgeführt wird, die ebenfalls auf Umgebungstemperatur liegt.

6. Verfahren nach einem der Ansprüche 1 bis 5, dadurch gekennzeichnet, daß zwei Muffen (22, 24) jeweils in der Nachbarschaft der beiden Enden des Schaftes um den Schaft (12) der Flasche (10) angeordnet werden.

7. Verfahren nach einem der Ansprüche 1 bis 6, dadurch gekennzeichnet, daß die Muffe (22) eine Dicke (e) von 3 bis 5 mm und eine Länge (1) von 3 bis 5 cm besitzt.

8. Verfahren nach einem der Ansprüche 1 bis 7, dadurch gekennzeichnet, daß der wärmeschrumpfbare Kunststoff Polyethylen (PE) ist, insbesondere vom Typ mit hoher Dichte (HDPE).

9. Flüssiggasflasche, die durch wenigstens eine Muffe (22, 24) aus Kunststoff geschützt ist, die wärmeschrumpfbar gemacht werden kann und nach dem Verfahren eines der Ansprüche 1 bis 8 erhalten wird.

## Claims

1. Method of protecting a bottle of liquid gas having a cylindrical barrel of given external perimeter, in which is prepared at least one sleeve (22, 24) formed of plastics material, and the sleeve is placed at a chosen site around the barrel (12), characterised in that it comprises the following operations:
a) preparing at least one sleeve (22, 24) of thermoretractable plastics material, brought to a deformed configuration by the action of heat, in which it has a widened internal perimeter (PE) relative to an initial internal perimeter (Pl) which it has in an initial configuration at rest, this widened internal perimeter (PE) and this initial internal perimeter (PI) being respectively larger than and smaller than the external perimeter (P₀) of the barrel (12);
b) heating the sleeve (22, 24) in its deformed configuration so as to bring it to a temperature of molecular malleability capable of permitting contraction of the sleeve towards its initial configuration;
c) placing the sleeve (22, 24) still hot around the barrel (12) at the chosen site and leaving the sleeve to cool and contract about the barrel.

2. Method according to claim 1, characterised in that the operation a) comprises the following stages:
- providing a tube (26) of a plastics material capable of being rendered thermoretractable and having the initial internal perimeter (Pl);
- pushing the tube (26) about a deformation tool (32) of increasing section, whilst subjecting the tube (26) to the action of heat in controlled conditions so that it has the widened internal perimeter (DE);
- cooling the tube (26) whilst keeping it at the widened internal perimeter (PE); and
- sectioning the tube (26) into individual sleeves (22), each having the widened internal perimeter (PE).

3. Method according to claim 1, characterised in that the operation a) comprises the following stages:
- providing a tube (26) of a plastics material capable of being rendered thermoretractable and having the initial internal perimeter (Pl);
- sectioning the tube (26) into individual sleeves (54), each having the initial internal perimeter (Pl);
- passing each sleeve (54) about a deformation tool (32) of increasing section and subjecting the sleeve to the action of heat in controlled conditions so that it has the widened internal perimeter (PE); and
- cooling the sleeve (22) having the widened internal perimeter (PE).

4. Method according to claim 1, characterised in that the operation b) is carried out in a hot-air ventilated furnace (60) in which at least one sleeve (22) is placed for a sufficient duration to bring it to its temperature of molecular malleability.

5. Method according to claim 1, characterised in that in the operation c) the cooling of the sleeve (22) is carried out at ambient temperature and in contact with the barrel (12) of the bottle (10), likewise at ambient temperature.

6. Method according to one of claims 1 to 5, characterised in that two sleeves (22, 24) are placed around the barrel (12) of the bottle (10), respectively in the vicinity of the two ends of the barrel.

7. Method according to one of claims 1 to 6, characterised in that the sleeve (22) has a thickness (e) of 3 to 5 mm and a length (I) of 3 to 5 cm.

8. Method according to one of claims 1 to 7, characterised in that the thermoretractable plastics material is polyethylene (PE), in particular of the high-density type (PE-HD).

9. Bottle of liquid gas protected by at least one sleeve (22, 24) of plastics material capable of being rendered thermoretractable, such as obtained by the method of one of claims 1 to 8.
